# EUROPEAN PATENT SPECIFICATION

(11) **EP 3 451 844 B1**
(45) Date of publication and mention of the grant of the patent: **01.04.2020**
(21) Application number: 17731275.8
(22) Date of filing: 04.05.2017
(51) Int. Cl.: A23B 7/04, A23B 7/144, B60H 1/34, F25D 17/04, F25D 17/06, F24F 13/072, A23B 4/03, A23B 4/044, F24F 11/00

(54) **AN IMPROVED PLANT FOR CURING AND/OR DRYING FOOD PRODUCTS**
VERBESSERTE ANLAGE ZUM HÄRTEN UND/ODER TROCKNEN VON LEBENSMITTELPRODUKTEN
INSTALLATION AMÉLIORÉE POUR TRAITER ET/OU SÉCHER DES PRODUITS ALIMENTAIRES

(30) Priority: 04.05.2016 IT UA20163155
(43) Date of publication of application: 13.03.2019
(73) Proprietor: Key Frost S.r.l., 30027 San Dona' Di Piave (Venezia) (IT)
(72) Inventor: CIBIN, Ennio, 30027 San Dona' Di Piave (Venezia) (IT)
(74) Representative: Piovesana, Paolo
(86) International application number: PCT/IB2017/052595
(87) International publication number: WO 2017/191589

(56) References cited:
- EP-A1- 1 657 506
- CA-A- 452 395
- DE-U1- 20 321 436
- FR-A1- 2 947 992
- US-B1- 6 354 196

## Description

The present invention relates to an improved plant for curing and/or drying food products.

In the prior art, the known plants for curing and/or drying food products comprise, in general, a chamber (or cell), generally parallelepiped-shaped, which is appropriately conditioned and ventilated and in which the food products to be dried/cured, e.g. meat-based, such as sausages or the like, or dairy, such as cheese and the like, are generally accommodated in suspended condition with respect to the floor.

In particular, an air flow at controlled pressure, flow rate and temperature conditions is sent and circulated inside the chamber to create the conditions suited for the curing and/or drying treatment.

More in detail, in a first type of known plants, the openings for delivering the air into the treatment chamber and those for aspirating the air from said chamber are obtained in the side walls.

In another known type, instead, both the openings for delivering the air into the chamber and those for aspirating the air from it are obtained and positioned at the ceiling, while guides are defined at the floor which act as flow directors, so as to create a forced air circulation, of alternating type, inside the treatment chamber.

However, such known plants are not completely satisfactory because, in addition to being rather complicated from the point of view of construction, they do not display an adequate diffusion of the air flow circulating inside the chamber in order to ensure that it evenly strikes the entire outer surface of each product at adequate speed. For this reason, some food products are inevitably compromised during the treatment and must therefore be rejected.

CA452394 describes a smoking oven comprising a box-shaped chamber with side walls, a ceiling and a floor with a distribution pipe and two suction pipes which are all positioned inside the chamber at the ceiling. In particular, the suction pipes are positioned at the two sides of the distribution pipe and have suction openings. So, in such oven, the air flow let out from the central suction pipe is sent downwards, skims the product underneath and from the bottom moves to the sides of the chamber to rise upwards in the suction pipes provided at the ceiling. Furthermore, a smoker is provided at the recirculation pipe which connects the suction pipe to the inlet of a fan.

This solution is not completely satisfactory because it does not allow the effective exploitation of the entire volume of the chamber since the products to be treated are positioned only under the central distribution pipe, while the side zones of the chamber must be clear in order to allow an appropriate rise of the air towards the side suction pipes.

US6354196 describes an apparatus for flash freezing food products comprising a housing chamber, which has an upper wall, a lower wall and two movable side walls and which is crossed from one side to the other by a conveyor belt for food products. Furthermore, a tunnel, which winds over and under the conveyor belt, as well as a high pressure chamber, which is positioned over the tunnel, are also provided inside the housing. Such apparatus does not appear suited for curing because the housing chamber is open at the inlet and outlet of the conveyor belt and therefore since a space closed and isolated from the outside is not provided, it is rather complicated to control the temperature, humidity and/or air flow rate/speed in order to create the conditions suited for curing and/or drying the food products.

FR 2947992 describes a rather complex plant for sterilizing and/or decontaminating a food product. In particular, the plant comprises a treatment chamber, in which the food products are positioned, an upper pipe, which is outside the treatment chamber and which contains the air purification unit, and a lower pipe, also outside the treatment chamber, which accommodates the unit for treatment ionized water to be sprayed on the food products. The air purified in the upper pipe is sent into the chamber through the upper distribution channel and lower distribution channel, and this in order to eliminate the humidity from the surface of the food products after the spraying of ionized water. Such plant includes neither an air suction circuit nor a recirculation circuit of the aspirated air.

DE20321436 describes a traditional cabinet structure for drying food products, which are positioned on the horizontal shelves of a trolley accommodated inside the cabinet itself. In particular, at the inner side of the cabinet, there is a vertical channel for the air, which is then laterally released with horizontal flows at the shelves of the trolley and is finally aspirated from the top by means of a central air vent provided at the upper wall of the cabinet itself.

EP1657506 describes a plant for treating the air in a passenger compartment of a public service vehicle. In particular, in such plant the outlet opening of the distribution pipes are specifically configured to create air vortexes which are not suited for the curing and/or drying treatment of food products. Furthermore, the recirculation circuit is positioned in the treatment chamber and this does not allow the optimal exploitation of the space inside the cabinet for containing the food products to be treated.

It is the object of the invention to suggest an improved plant for curing and/or drying food products which overcomes the drawbacks of the traditional plants and which is alternative and ameliorative with respect to them.

It is another object of the invention to suggest a plant which maximizes the number of food products which can be treated at the same time in the treatment chamber while ensuring uniformity of treatment.

It is another object of the invention to suggest a plant which is particularly efficient from the energy point of view and which, in particular, allows a reduction of the curing and/or drying times of the food products.

It is another object of the invention to suggest a plant which ensures a uniformity of treatment of the products, regardless of their size and/or position in the treatment chamber.

It is another object of the invention to suggest a plant which is completely automated, safe and which minimizes the number of operations required by operators.

It is another object of the invention to suggest a plant which is particularly simple, quick and cost-effective to create, install and maintain.

It is another object of the invention to suggest a plant with an alternative characterization, in terms of construction, function and performance, with respect to the traditional ones.

All these objects, taken individually or in any combination thereof, and others which will become apparent from the following description, are achieved, according to the invention, by an improved plant for curing and/or drying food products indicated in claim 1.

In particular, according to the invention, the improved plant for curing and/or drying food products is characterized in that it comprises:
- a chamber comprising substantially vertical side walls, closed at the top by a ceiling wall and at the bottom by a floor wall, so as to delimit as a whole a space, which is closed and isolated from the outside, for containing the food products to be cured and/or dried,
- an air treatment unit, which is operatively associated with said chamber and which is provided with an inlet for the air to be treated and an outlet for the treated air,
- an air supply/delivery circuit, which connects the outlet of said air treatment unit to the inside of the chamber, said air supply/delivery circuit comprising at least one pipe for distributing the air treated by said unit inside the chamber, said at least one distribution pipe being provided with first openings, which are obtained and/or defined either at or in said ceiling, for releasing the treated air into said chamber,
- an air suction circuit, which connects the inside of the chamber to the inlet of said air treatment unit by means of a recirculation circuit positioned outside the chamber, said suction circuit comprising at least one pipe provided with second openings, which are obtained and/or defined either at or in said floor, to aspirate the saturated air present inside said chamber,
- a control, management and monitoring unit configured to create the temperature, humidity and/or air flow rate/speed conditions in the chamber suited for the curing and/or drying treatment of the products intended to be contained in said chamber,
and further characterized in that said first through openings in the ceiling, for releasing the air into said chamber, and said second through openings in the floor, for aspirating the saturated air present inside said chamber, are configured to create inside the chamber only a laminar and vertical air flow, which is exclusively directed from the ceiling towards the floor.

Advantageously, the inner body of the side walls and/or of the ceiling wall and/or of the floor wall is washable.

Advantageously, said delivery/supply circuit of the air into the chamber comprises a plurality of distribution pipes which are associated with and/or defined in said ceiling so as to concern its surface evenly. Preferably, the distribution pipes are obtained in said ceiling. Preferably, the distribution pipes are either constrained to or hanging from said ceiling. Preferably, the distribution pipes are removable and/or made of flexible and anti-bacterial material.

Advantageously, prefilters are provided at the suction and/or recirculation and/or supply circuit.

Advantageously, the suction pipes are embedded in corresponding longitudinal housings obtained in said floor.

Advantageously, the distribution pipes and/or the components of the air treatment unit can be disassembled in order to be sanitized.

The present invention is further explained by means of some preferred embodiments given by way of non-limiting example only, with reference to the accompanying drawings, in which:

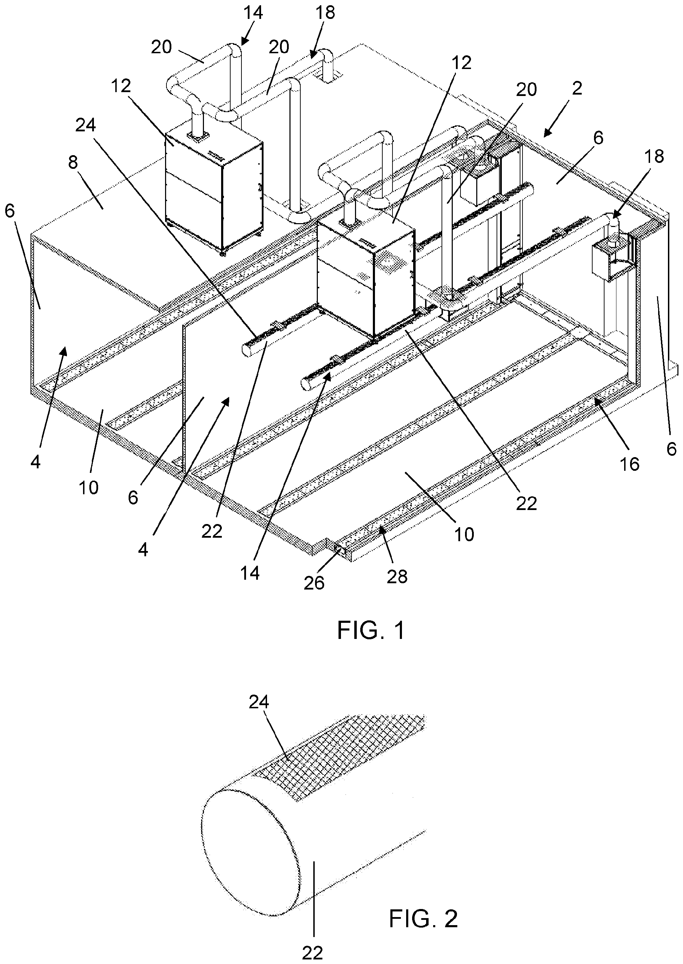

- Figure 1: shows a perspective view of an improved plant according to the invention with some walls of the treatment chamber removed for the sake of clarity of illustration,
- Figure 2: shows a first enlarged detail of the plant in fig. 1;
- Figure 3: shows a second enlarged detail of the plant in fig. 1;
- Figure 4: shows a perspective view of a component of the plant in fig. 1;
- Figure 5: shows an enlarged detail of fig. 4 and
- Figure 6: diagrammatically shows the air flow in the chamber of the plant according to the invention.

As shown in the figures, the improved plant 2, according to the invention, for curing and/or drying food products 3 (e.g. meat-based, such as sausages or the like, or dairy, such as cheese of the like), comprises a chamber or cell 4, which is closed on all its sides and is provided with at least one door, not shown, to allow the operator to access into the chamber itself.

In particular, the chamber 4, preferably parallelepiped-shaped, substantially comprises vertical side walls 6, closed at the top by a substantially horizontal ceiling wall 8 and at the bottom by a substantially horizontal floor wall 10, so as to delimit, as a whole, a space which is closed and isolated from the outside, in which the products to be treated 3 are intended to be accommodated. Preferably, the food products to be treated 3 are tidily arranged inside the chamber 4 and are appropriately raised with respect to the floor 10.

Advantageously, the inner body of the walls 6, 8 and 10 is painted and washable.

The plant 2 also comprises an air treatment unit 12, hereinafter indicated as "UTA", which is operatively associated with the chamber 4 and which may be positioned either inside or, preferably, outside the space delimited by the walls thereof.

The plant 2 further comprises a supply/delivery circuit 14, connected to the outlet of the UTA, for supplying the air, treated by the UTA itself, into the chamber 4 and a circuit 16 for aspirating the saturated air from inside the chamber and for sending it, by means of a recirculation circuit 18, in input to the UTA for its treatment.

Advantageously, appropriate prefilters are provided at the suction 16 and/or recirculation 18 circuit, while appropriate filters, preferably with filtering efficiency higher than 99.995%, are provided at the supply circuit 14. Advantageously, if necessary, further electrostatic filters may be included to abate the bacterial load inside the UTA 12 and/or the circuits 14, 16 and/or 18.

In particular, the supply circuit 14, at the outlet of the UTA 12, comprises conveying pipes 20, preferably circular and made of stainless steel, the end parts of which are connected to distribution pipes 22, which are hanging from and/or obtained in the ceiling 8 of the chamber 4.

Appropriately, the distribution pipes 22 are made of flexible material (e.g. polyamide) and, preferably, they are made of anti-bacterial fabric.

First through openings 24, preferably slot-shaped, of variable size, are obtained in the distribution pipes 22. Appropriately, such openings 24 are covered by a net, preferably a large mesh fly net, made of polyester filter, glass or PVC.

The distribution pipes 22 are associated with/constrained to/hanging from the ceiling 8 and protrude from it into the chamber 4 or are obtained and/or defined in the ceiling 8 itself, so that the air flow 21 which is released from the openings 24 defined in the pipes 22 is distributed inside the chamber 4 in a particularly even manner, thus ensuring the same level of thermo-hygrometric parameters and of air speed on all the products contained in the chamber itself. Preferably, the pipes 22 for distributing the air inside the chamber are mutually parallel and arranged so as to concern the entire, or at least most, of the surface of said ceiling 8 evenly.

Longitudinal housings 26 open upwards, inside which the pipes 28 of the suction circuit 16 are accommodated, are provided on the floor 10. In particular, the suction pipes 28 are provided with second through openings 34 which are obtained and/or defined at or in the floor 10 so as to connect the inside of the chamber 4 to said suction pipes 28. Advantageously, a plurality of longitudinal housings 26 are defined in the floor 10, in which the corresponding pipes 28 are embedded inside the concrete. Preferably, the pipes 28 are mutually parallel and appropriately arranged so as to concern the entire surface, or at least most of the surface, of the floor 10 evenly.

In particular, the suction pipes 28 comprise a lower portion 29, defining a channel 30, and an upper plate 32, which is substantially flushed with the floor.

The closing plate 32 is provided with said second through openings 34, preferably through holes, for aspirating from the chamber 4 the saturated air 23, which comes from the top and which has skimmed the products to be treated 3, so as to allow it to enter into the channels 30 of the suction pipes 28. Correspondingly, during the step of washing and sanitizing the treatment chamber 4, the water or the washing liquid also crosses the same holes 34 and enters into the channels 30 to be appropriately conveyed and discharged outside.

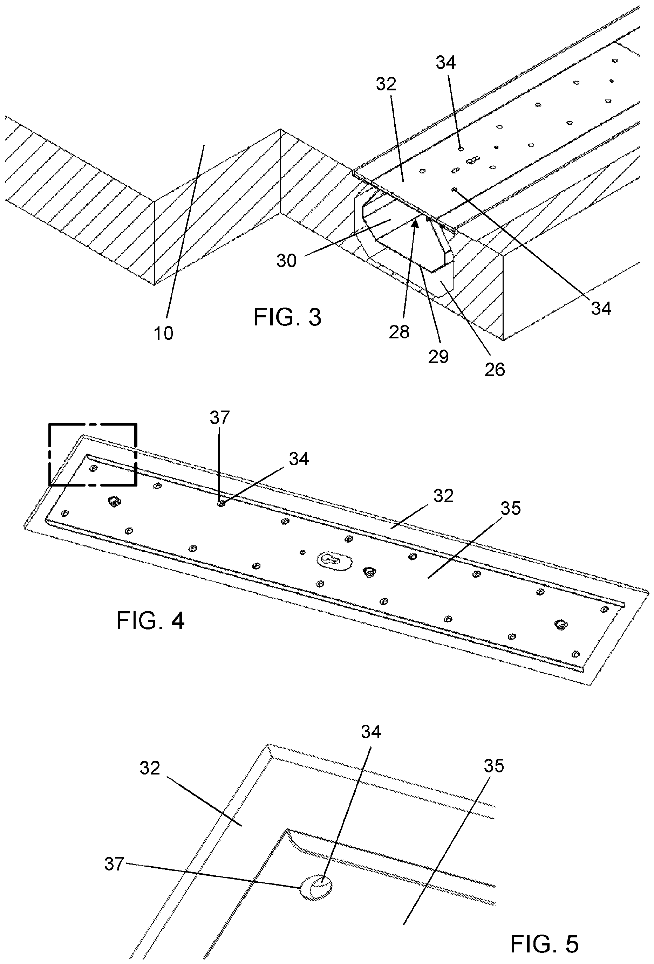

Advantageously, the suction pipes 28 also comprise a second plate 35, which is provided with third through openings 37, preferably through holes, and is slidingly constrained to the lower surface of the upper plate 32. In particular, the second plate 35 slides longitudinally with respect to the upper plate 32 so as to modify the alignment of the respective through holes 34 and 37 of the two plates, and thus vary the entry passage section, and thus the speed, of the saturated air 23 into the channels 30 (see fig. 5). Appropriately, if lack of uniformity is found in the air distribution speed inside the chamber 4, the operator may act on the second plate 35 to modify the alignment of the through holes 37 of the latter with respect to the through holes 34 of the upper plate 32, so as to vary the passage section, and thus the suction speed, of the saturated air 23 in the channels 30, thus allowing to have the same air suction speed evenly distributed at the entire floor 10 of the chamber 4.

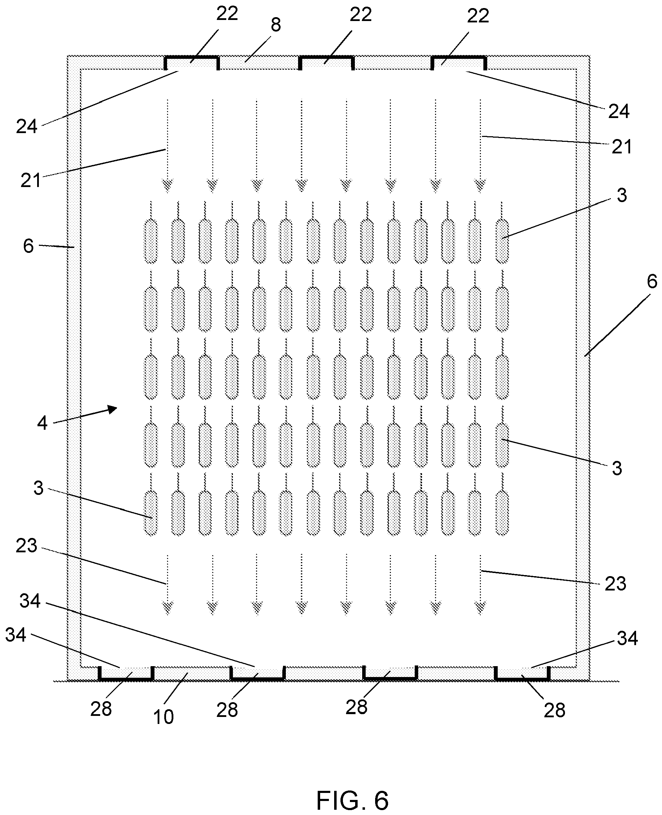

Advantageously, the first through openings 24 in the ceiling 8, to release the air into said chamber 4, and said second through openings 34 in the floor 10, for aspirating the saturated air from inside said chamber 4 are configured so that a laminar and vertical air flow 21, 23, which goes from the top downwards (i.e. without any forced return and rising flow) and which skims the food products to be treated 3 at slow speed is exclusively created (cf. fig. 6). Advantageously, each distribution pipe 22 in the ceiling 8, which is provided with first through openings 24, vertically faces a portion of floor 10 which is comprised and preferably equally spaced apart from two adjacent and parallel suction pipes 28, which are provided at the floor 10 and which are provided with second through openings 34. Appropriately, in an embodiment not shown, the distribution pipes in the ceiling 22 may vertically face the suction pipes 16 in the floor so that the first through openings 24, in the ceiling 8 for releasing/distributing the air 21 which was treated by the UTA 12 inside the chamber 4 also vertically face/are aligned with said second through openings 34 in the floor 10 for releasing/aspirating the saturated air 23 inside said chamber 4.

The lower portion 29 which defines the channels 30 is made of metal or alloys thereof (e.g. AISI 304) and has a cross section, e.g. hexagonal, capable of sustaining a heavy structural load. More in detail, the lower portion 29 comprises two side wings for constraining the closing plate 32. The cross section area of the channel 30 varies according to the needs of the products to be treated and the features of the ground on which the floor 10 is defined, and in all cases is such to allow the constant and fast elimination of water during the step of sanitizing the cell.

The upper closing plate 32 is made of metal or alloys thereof (e.g. AISI 304) and is also shaped and dimensioned so as to sustain a heavy structural load, such as that of the weight of the operator walking on the floor 10 of the chamber 4.

As mentioned, the suction circuit 16 is connected to the recirculation circuit 18, which comprises the air recirculation pipes, which are positioned in appropriate box-like structures positioned outside the chamber 4 and which connect the suction pipes 28 with the inlet of the UTA 12.

Preferably, the pipes of the recirculation circuit 18 are made of metal (e.g. AISI 304) with panel portions which can be opened for inspecting and sanitizing inside. Appropriately, the opening portions are provided with high-resistance hinges and closures with appropriate seals.

Appropriately, the UTA 12 is configured so that the air flow 21 which is released into the chamber 4 of the openings 24 of the distribution pipes 22 of the supply circuit 14 skims the food products 3 at particularly low speed, of approximately 1 - 10m/s, preferably 3 - 6 m/s, which may remain either constant or may be appropriately variable, according to needs or according to a predetermined product treatment program.

In particular, the UTA 12 comprises one or more heat exchange batteries (for cooling and heating), one or more air filters and a suction/delivery fan. Advantageously, the UTA 12 also comprises means which implement a complete refrigerating cycle (evaporator, compressor, cooling serpentine, condenser and lamination or thermostatic valve).

Preferably, the cooling battery is of the direct expansion type. In particular, the lamination member is made with an electronic expansion valve of the stepper type and this allows a more accurate adjustment of the refrigerating flow, thus determining an increase of efficiency of the plant 2.

Preferably, the hot gas heating battery is fed with the hot gas coming from the exhaust of the compressor provided in the refrigerating means, and in this manner the heat is exploited which would otherwise be irreversibly lost towards the outside environment without being exploited. In particular, this heat recovery allows to avoid, or at least limit, the use of fuel boilers for the production of hot water.

Appropriately, a hot water heating battery may be included which, only if necessary, assists the hot gas heating battery. In particular, such battery is fed with hot water and the flow rate is adjusted by means of three-way motorized and modulating valve.

Preferably, the heat exchange batteries of the UTA 12 are made with anti-corrosion treatment by means of cataphoresis painting and anti-bacterial powder treatment. In particular, the latter treatment allows to avoid any corrosion phenomena in the tubes, the wings and the collectors of the batteries themselves, as well as to reduce the bacterial load.

Preferably, the heat exchange batteries and/or the means which implement the refrigerating cycle of the UTA 12 use low environmental impact refrigerating gas, such as for example R134a, which is a low level gas (equal to approximately 1430) of global warming potential (said "GWP").

Appropriately, the components of the UTA 12 and/or the distribution pipes 22 can all be conveniently and rapidly disassembled to be sanitized and this is particularly advantageous because it allows to ensure a high level of hygiene and cleanness, thus either avoiding or decreasing the use of artificial chemical products and/or any risk of undesired contamination of the products to be treated.

The plant 2 also comprises a control unit, e.g. a PLC, not shown, which constantly controls and manages all the process variables in order to create the humidity, temperature and/or air flow rate conditions in the chamber 4 for the curing and/or drying treatment of the food products 3 contained in the chamber itself.

In particular, for this purpose, traditional type sensors are included, which measure a series of parameters and send the corresponding signals representative of the values thus measured to the control unit. More in detail, the measured parameters comprise:
- air temperature in the chamber 4, in the outside environment, in the supply/delivery circuit 14, at the first openings 24, in the air intake circuit 16, in the recirculation circuit 18 and preferably also for the temperature and pressure of the refrigerating gas used in the UTA 12,
- humidity of the air inside the chamber 4 and in the outside environment,
- air speed at the first outlet openings 24 of the air itself in the chamber 4.

Substantially, on the basis of the measured thermo-hygrometric temperature, humidity and speed values, and according to the features and/or quantity of product to be treated 3, the control unit controls the UTA 12 so that the air 21 introduced into the treatment chamber 4, by means of the supply/delivery circuit 14, defines the temperature, humidity and/or air speed conditions in the chamber itself suited to curing and/or drying the products 3 contained in the chamber itself.

In particular, for this purpose, the control unit controls and manages one of the following parameters:
- speed of the suction/delivery fan or fans provided in the UTA 12,
- speed of the compressor and of the condenser fans of the means provided in the UTA 12 to implement a complete refrigerating cycle,
- modulation of the valves provided in the UTA 12, as well as those provided for the introduction of air coming from the outside environment into the UTA,
- refrigerating gas temperature.

Advantageously, the plant 2 is also provided with a continuous monitoring system of the electrical power supply of the UTA 12 and/or of the control unit in order to diagnose possible malfunctions of the plant itself. Furthermore, on the basis of the values measured by said monitoring system, the control unit is configured to calculate the instantaneous, hourly, daily or weekly consumption of the plant itself.

Appropriately, a control interface, e.g. a touchscreen type panel, is also provided and positioned outside the chamber 4. Appropriately, by acting on the interface, the user may set and/or modify the operating parameters of the plant 2.

Advantageously, the control unit may be configured to manage the treatment cycles automatically in sequence consisting of multiple steps, each of which has predetermined and independent operating parameters, in terms of differential set-points and different air speed, temperature and humidity adjustments.

Advantageously, the control unit may be connected remotely to an external supervision unit configured to remotely control the operation of the plant 2, to record and graphically view all the process variables, to register the alarms and to send appropriate warning signals to the user.

From the above, it results that the plant according to present invention is more advantageous than traditional plants because:
- it allows to create a single natural, laminar and vertical air flow directed downwards in the curing and/or drying chamber,
- it allows an adequate diffusion of the air flow inside the chamber so as to ensure that it skims the entire outer surface of each product delicately and evenly,
- it allows to accurately adjust the air speed in the chamber, and thus adjust the speed at which it strikes the product present in the cell; in particular, this allows to manage the required loss of product weight more accurately and to use a lower treatment temperature, thus reducing the preservatives to be used in the product itself,
- it allows major energy saving because the air flow sent into the treatment chamber is constant but reduced, and furthermore the heat produced inside the UTA is reused inside it without any dispersion and successive regeneration;
- it is ecologically sustainable,
- it is easy to create because no shells need to be made on the floor with the function of flow directors,
- it allows a high level of hygiene and sanitation because each component may be disassembled and cleaned.

In particular, the plant according to the invention differs from those in CA452394, US6354196, FR 2947992, DE20321436 and EP1657506 because none of them describes a chamber, which delimits a closed space isolated from the outside for drying and/or curing food products inside, in which the openings for releasing the air into the chamber are at the ceiling, while the openings for aspirating the saturated air from the chamber itself are at the floor. Advantageously, this allows to create a single laminar air flow directly only from the top downwards to skim and envelop delicately and evenly all the food products to be treated in the chamber, while allowing to exploit the volume inside the chamber optimally and completely, thus maximizing the number of food products which may be treated at the same time in the chamber itself. In particular, the fact that the suction openings are positioned at the floor allows to exploit also the space near the side walls, which traditionally was left clear to allow the forced air flow to rise from the bottom upwards in order to reach the suction opening, which were traditionally provided on the ceiling. Furthermore, the fact that the air suction opening are positioned at the floor allows to use the same openings also for discharging water or other liquids outside during the step of washing and sanitizing the chamber, thus simplifying the construction of the plant itself.

The plant according to the invention is particularly suited for curing and/or drying food products, such as sausages or dairy products. In particular, in the case of sausages 3, the plant according to the invention is firstly configured to perform a step of drying the sausages themselves (which generally has variable duration from 6 to 10 days) during which the air flow is controlled in order to create the suitable temperature (about 15-20°C at most) and relative humidity (increasing over time from about 70-75% to about 80-85%) conditions in the chamber 4 so that the water loss of the product is as even as possible in the entire thickness of the mixture, and thus to prevent the hardening of the casing. Successively, the plant according to the invention is configured to perform a step of curing the previously dried sausages 3. During this step, the air flow is controlled so as to create a micro-climate inside the chamber 4 with temperature of about 10-16°C and humidity of about 60%, which contributes to the creation of molds useful for the aging of the sausages. In such case, the constant cleanness of the air which enters into the room 4 is fundamental to avoid the introduction of undesired or contaminating substances in the casing.

It is also understood that with possible and appropriate changes, fully within the grasp of a person skilled in the art, the plant according to the invention may be used for drying pasta and/or for other applications in which the food product is treated by circulating air at controlled temperature, humidity and speed in the space.

## Claims

1. An improved plant (2) for curing and/or drying food products (3), **characterized in that** it comprises:
- a chamber (4) comprising substantially vertical side walls (6), closed at the top by a ceiling wall (8) and at the bottom by a floor wall (10), so as to delimit as a whole a space, which is closed and isolated from the outside, for containing the food products to be cured and/or dried (3),
- an air treatment unit (12), which is operatively associated with said chamber (4) and which is provided with an inlet for the air to be treated and an outlet for the treated air,
- an air supply/delivery circuit (14), which connects the outlet of said air treatment unit (12) to the inside of the chamber (4), said air supply/delivery circuit (14) comprising at least one pipe (22) for distributing the air treated by said unit (12) inside the chamber (4), said at least one distribution pipe (22) being provided with first openings (24), which are obtained and/or defined either at or in said ceiling (8), for releasing the treated air (21) into said chamber (4),
- an air suction circuit (16), which connects the inside of the chamber (4) to the inlet of said air treatment unit (12) by means of a recirculation circuit (18) positioned outside the chamber (4), said suction circuit (16) comprising at least one pipe (28) provided with second openings (34), which are obtained and/or defined either at or in said floor (10), to aspirate the saturated air (23) present inside said chamber (4),
- a control, management and monitoring unit configured to create the temperature, humidity and/or air flow rate/speed conditions in the chamber (4) suited for the curing and/or drying treatment of the products intended to be contained in said chamber (4),
and further **characterized in that** said first through openings (24) in the ceiling (8), for releasing the air (21) into said chamber (4), and said second through openings (34) in the floor (10), for aspirating the saturated air (23) present inside said chamber (4), are configured to create inside the chamber only a laminar and vertical air flow, which is exclusively directed from the ceiling (8) towards the floor (10).

2. A plant according to claim 1, **characterized in that** said air treatment unit (12) is positioned outside said chamber (4).

3. A plant according to one or more of the preceding claims, **characterized in that** said delivery/supply circuit (14) of the air (21) into the chamber (4) comprises a plurality of distribution pipes (22) which are associated with and/or defined in said ceiling (8) so as to concern its surface evenly.

4. A plant according to one or more of the preceding claims, **characterized in that** said suction pipes (28) are obtained and/or defined in said floor (10) and are accommodated in corresponding longitudinal housings (26) obtained in said floor (10).

5. A plant according to one or more of the preceding claims, **characterized in that** the suction pipes (28) are accommodated in corresponding longitudinal housings (26) so as to concern the surface of said floor (10) evenly.

6. A plant according to one or more of the preceding claims, **characterized in that** each distribution pipe (22) on the ceiling faces a floor portion (10) interposed between two adjacent suction pipes (22) on the floor (10).

7. A plant according to one or more of the preceding claims, **characterized in that** said first two through openings (24) in the ceiling (8), for releasing the air into said chamber (4), face said second through openings (34) in the floor (10), for aspirating the air present inside said chamber (4).

8. A plant according to one or more of the preceding claims, **characterized in that** said pipes (28) in the floor (10) for aspirating the air from said chamber (4) comprise an upper covering plate (32), which is substantially flushed with said floor (10).

9. A plant according to one or more of the preceding claims, **characterized in that** said pipes (28) in the floor (10) for aspirating the air from said chamber (4) comprise a portion (29) which defines a lower channel (30) with said covering plate (32).

10. A plant according to one or more of the preceding claims, **characterized in that** said second through suction openings (34) are obtained flushed with said floor (10) and are in communication with said suction pipes (28).

11. A plant according to one or more of the preceding claims, **characterized in that** said second through openings (34) are obtained in said covering plate (32) to let into said suction pipes (28) either the air present in said chamber or the washing liquid during the step of washing and sanitizing said chamber.

12. A plant according to one or more of the preceding claims, **characterized in that** said pipes (28) in the floor (10) for aspirating the air from said chamber (4) also comprise a second plate (35), which is provided with corresponding third through openings (37) and which is slidingly constrained to the lower surface of said upper covering plate (32), and **in that** by sliding the second plate (35) longitudinally with respect to the upper covering plate (32), the alignment of said second openings (34) and said third openings (37) obtained in the respective plates is modified, and thus the passage section is varied, a well as the suction speed for the air (23) which enters into the suction pipes (28).

13. A plant according to one or more of the preceding claims, **characterized in that** said air treatment unit (12) also comprises means which implement a complete refrigeration cycle.

14. A plant according to one or more of the preceding claims, **characterized in that** said air treatment unit (12) is configured and controlled by said control and management unit of said plant (2) so that the air (21) which exits from said first openings (24) in said chamber (4) skims the products (3) to be cured and/or dried at a speed substantially from 1m/s to 10m/s.

15. A plant according to one or more of the preceding claims, **characterized in that** said control, management and monitoring unit is connected and in communication with an external supervision unit for remotely controlling and managing said plant (2).

## Patentansprüche

1. Verbesserte Anlage (2) zum Härten und/oder Trocknen von Lebensmittelprodukten (3), **dadurch gekennzeichnet, dass** sie umfasst:
- eine Kammer (4), umfassend im Wesentlichen vertikale Seitenwände (6), die an der Oberseite durch eine Deckenwand (8) und an der Unterseite durch eine Bodenwand (10) geschlossen ist, um einen Raum, der geschlossen und von der Außenseite isoliert ist, in seiner Gesamtheit zu begrenzen, zum Umschließen der zu härtenden und/oder zu trocknenden Lebensmittelprodukte (3),
- eine Luftbehandlungseinheit (12), die operativ mit der Kammer (4) verbunden ist und die mit einem Einlass für die zu behandelnde Luft und einem Auslass für die behandelte Luft versehen ist,
- einen Luftversorgungs-/-zufuhrkreislauf (14), der den Auslass der Luftbehandlungseinheit (12) mit der Innenseite der Kammer (4) verbindet, wobei der Luftversorgungs-/-zufuhrkreislauf (14) mindestens eine Rohrleitung (22) zum Verteilen der durch die Einheit (12) behandelten Luft in der Kammer (4) umfasst, wobei die mindestens eine Verteilerrohrleitung (22) mit ersten Öffnungen (24), die entweder an oder in der Decke (8) erhalten und/oder definiert sind, zum Freigeben der behandelten Luft (21) in die Kammer (4) versehen ist,
- einen Luftansaugkreislauf (16), der die Innenseite der Kammer (4) mit dem Einlass der Luftbehandlungseinheit (12) mittels eines Rezirkulationskreislaufs (18) verbindet, der außerhalb der Kammer (4) angeordnet ist, wobei der Ansaugkreislauf (16) mindestens eine Rohrleitung (28) umfasst, die mit zweiten Öffnungen (34) versehen ist, die entweder an oder in dem Boden (10) erhalten und/oder definiert sind, um die gesättigte Luft (23), die in der Kammer (4) vorhanden ist, anzusaugen,
- eine Steuerungs-, Verwaltungs- und Überwachungseinheit, die dazu ausgelegt ist, die Bedingungen von Temperatur, Feuchtigkeit und/oder Luftstromrate/-geschwindigkeit in der Kammer (4) zu erzeugen, die für die Härte- und/oder Trockenbehandlung der Produkte, die in der Kammer (4) umschlossen werden sollen, geeignet sind,
und ferner **dadurch gekennzeichnet, dass** die ersten Durchgangsöffnungen (24) in der Decke (8) zum Freigeben der Luft (21) in die Kammer (4) und die zweiten Durchgangsöffnungen (34) in dem Boden (10) zum Ansaugen der gesättigten Luft (23), die in der Kammer (4) vorhanden ist, dazu ausgelegt sind, in der Kammer nur einen laminaren und vertikalen Luftstrom zu erzeugen, der ausschließlich von der Decke (8) in Richtung des Bodens (10) gerichtet ist.

2. Anlage nach Anspruch 1, **dadurch gekennzeichnet, dass** die Luftbehandlungseinheit (12) außerhalb der Kammer (4) angeordnet ist.

3. Anlage nach einem oder mehreren der vorhergehenden Ansprüche, **dadurch gekennzeichnet, dass** der Versorgungs-/Zufuhrkreislauf (14) der Luft (21) in die Kammer (4) eine Vielzahl von Verteilerrohrleitungen (22) umfasst, die mit der Decke (8) verbunden und/oder in dieser definiert sind, um deren Oberfläche gleichmäßig zu betreffen.

4. Anlage nach einem oder mehreren der vorhergehenden Ansprüche, **dadurch gekennzeichnet, dass** die Ansaugrohrleitungen (28) in dem Boden (10) erhalten und/oder definiert sind und in entsprechenden längsverlaufenden Gehäusen (26), die in dem Boden (10) erhalten sind, untergebracht sind.

5. Anlage nach einem oder mehreren der vorhergehenden Ansprüche, **dadurch gekennzeichnet, dass** die Ansaugrohrleitungen (28) in entsprechenden längsverlaufenden Gehäusen (26) untergebracht sind, um die Oberfläche des Bodens (10) gleichmäßig zu betreffen.

6. Anlage nach einem oder mehreren der vorhergehenden Ansprüche, **dadurch gekennzeichnet, dass** jede Verteilerrohrleitung (22) an der Decke einem Bodenabschnitt (10) zugewandt ist, der zwischen zwei benachbarten Ansaugrohrleitungen (22) an dem Boden (10) eingefügt ist.

7. Anlage nach einem oder mehreren der vorhergehenden Ansprüche, **dadurch gekennzeichnet, dass** die ersten zwei Durchgangsöffnungen (24) in der Decke (8) zum Freigeben der Luft in die Kammer (4) den zweiten Durchgangsöffnungen (34) in dem Boden (10) zum Ansaugen der Luft, die in der Kammer (4) vorhanden ist, zugewandt sind.

8. Anlage nach einem oder mehreren der vorhergehenden Ansprüche, **dadurch gekennzeichnet, dass** die Rohrleitungen (28) in dem Boden (10) zum Ansaugen der Luft aus der Kammer (4) eine obere Abdeckplatte (32), die mit dem Boden (10) im Wesentlichen bündig ist, umfassen.

9. Anlage nach einem oder mehreren der vorhergehenden Ansprüche, **dadurch gekennzeichnet, dass** die Rohrleitungen (28) in dem Boden (10) zum Ansaugen der Luft aus der Kammer (4) einen Abschnitt (29), der einen unteren Kanal (30) mit der Abdeckplatte (32) definiert, umfassen.

10. Anlage nach einem oder mehreren der vorhergehenden Ansprüche, **dadurch gekennzeichnet, dass** die zweiten Ansaugöffnungen (34) bündig mit dem Boden (10) erhalten sind und in Verbindung mit den Ansaugrohrleitungen (28) sind.

11. Anlage nach einem oder mehreren der vorhergehenden Ansprüche, **dadurch gekennzeichnet, dass** die zweiten Durchgangsöffnungen (34) in der Abdeckplatte (32) erhalten sind, um entweder die Luft, die in der Kammer vorhanden ist, oder die Waschflüssigkeit während des Schritts des Waschens und Hygienischmachens der Kammer in die Ansaugrohrleitungen (28) einzulassen.

12. Anlage nach einem oder mehreren der vorhergehenden Ansprüche, **dadurch gekennzeichnet, dass** die Rohrleitungen (28) in dem Boden (10) zum Ansaugen der Luft aus der Kammer (4) außerdem eine zweite Platte (35) umfassen, die mit entsprechenden dritten Durchgangsöffnungen (37) versehen ist und die gleitbar an der Unterseite der oberen Abdeckplatte (32) gehalten ist, und dadurch, dass durch ein Gleiten der zweiten Platte (35) in Längsrichtung in Bezug auf die obere Abdeckplatte (32) die Ausrichtung der zweiten Öffnungen (34) und der dritten Öffnungen (37), die in den jeweiligen Platten erhalten sind, modifiziert wird und dadurch der Durchgangsabschnitt und die Ansauggeschwindigkeit für die Luft (23), die in die Ansaugrohrleitungen (28) eintritt, variiert werden.

13. Anlage nach einem oder mehreren der vorhergehenden Ansprüche, **dadurch gekennzeichnet, dass** die Luftbehandlungseinheit (12) außerdem ein Mittel umfasst, das einen vollständigen Kühlzyklus implementiert.

14. Anlage nach einem oder mehreren der vorhergehenden Ansprüche, **dadurch gekennzeichnet, dass** die Luftbehandlungseinheit (12) durch die Steuerungs- und Verwaltungseinheit der Anlage (2) konfiguriert und gesteuert wird, sodass die Luft (21), die aus den ersten Öffnungen (24) in der Kammer (4) austritt, die zu härtenden und/oder zu trocknenden Produkte (3) mit einer Geschwindigkeit im Wesentlichen von 1 m/s bis 10 m/s streift.

15. Anlage nach einem oder mehreren der vorhergehenden Ansprüche, **dadurch gekennzeichnet, dass** die Steuerungs-, Verwaltungs- und Überwachungseinheit mit einer externen Leitungseinheit zum dezentralen Steuern und Verwalten der Anlage (2) verbunden und damit in Verbindung ist.

## Revendications

1. Installation améliorée (2) de cuisson et/ou de séchage de produits alimentaires (3), **caractérisée en ce qu'**elle comprend:
- une chambre (4) comprenant des parois latérales sensiblement verticales (6), fermée en haut par une paroi de plafond (8) et en bas par une paroi de plancher (10), de manière à délimiter dans son ensemble un espace, qui est fermé et isolé de l'extérieur, pour contenir les produits alimentaires à conserver et/ou à sécher (3),
- une unité de traitement d'air (12), qui est fonctionnellement associée à ladite chambre (4) et qui est pourvue d'une entrée pour l'air à traiter et d'une sortie pour l'air traité,
- un circuit d'alimentation/distribution d'air (14), qui relie la sortie de ladite unité de traitement d'air (12) à l'intérieur de la chambre (4), ledit circuit d'alimentation/de distribution d'air (14) comprenant au moins un tuyau (22) pour distribuer l'air traité par ladite unité (12) à l'intérieur de la chambre (4), ledit au moins un tuyau de distribution (22) étant pourvu de premières ouvertures (24), qui sont obtenues et/ou définies soit au niveau dudit plafond, soit dans celui-ci (8), pour libérer l'air traité (21) dans ladite chambre (4),
- un circuit d'aspiration d'air (16), qui relie l'intérieur de la chambre (4) à l'entrée de ladite unité de traitement d'air (12) au moyen d'un circuit de recirculation (18) positionné à l'extérieur de la chambre (4), ledit circuit d'aspiration (16) comprenant au moins un tuyau (28) pourvu de secondes ouvertures (34), qui sont obtenues et/ou définies soit au niveau dudit plancher (10), soit pour y aspirer l'air saturé (23) présent à l'intérieur de ladite chambre (4),
- une unité de contrôle, de gestion et de surveillance configurée pour créer les conditions de température, d'humidité et/ou de débit/vitesse d'air dans la chambre (4) adaptées au traitement de durcissement et/ou de séchage des produits destinés à être contenus dans ladite chambre (4),
et **caractérisé en outre en ce que** lesdites premières ouvertures traversantes (24) dans le plafond (8), pour libérer l'air (21) dans ladite chambre (4), et lesdites secondes ouvertures traversantes (34) dans le plancher (10), pour aspirer l'air saturé (23) présent à l'intérieur de ladite chambre (4), sont configurées pour créer à l'intérieur de la chambre uniquement un flux d'air laminaire et vertical, qui est exclusivement dirigé du plafond (8) vers le sol (10).

2. Installation selon la revendication 1, **caractérisée en ce que** ladite unité de traitement d'air (12) est positionnée à l'extérieur de ladite chambre (4).

3. Installation selon une ou plusieurs des revendications précédentes, **caractérisée en ce que** ledit circuit de distribution/alimentation (14) de l'air (21) dans la chambre (4) comprend une pluralité de tuyaux de distribution (22) qui sont associés à et/ou définie dans ledit plafond (8) de manière à concerner sa surface de manière homogène.

4. Installation selon une ou plusieurs des revendications précédentes, **caractérisée en ce que** lesdits tuyaux d'aspiration (28) sont obtenus et/ou définis dans ledit plancher (10) et sont logés dans des correspondants logements longitudinaux (26) obtenus dans ledit plancher (10).

5. Installation selon une ou plusieurs des revendications précédentes, **caractérisée en ce que** les tuyaux d'aspiration (28) sont logés dans des correspondants logements longitudinaux (26) de manière à concerner uniformément la surface dudit plancher (10).

6. Installation selon une ou plusieurs des revendications précédentes, **caractérisée en ce que** chaque tuyau de distribution (22) au plafond fait face à une portion de plancher (10) interposée entre deux tuyaux d'aspiration adjacents (22) au plancher (10).

7. Installation selon une ou plusieurs des revendications précédentes, **caractérisée en ce que** lesdites deux premières ouvertures traversantes (24) dans le plafond (8), pour libérer l'air dans ladite chambre (4), font face auxdites secondes ouvertures traversantes (34) dans le plancher (10), pour aspirer l'air présent à l'intérieur de ladite chambre (4).

8. Installation selon une ou plusieurs des revendications précédentes, **caractérisée en ce que** lesdits tuyaux (28) dans le plancher (10) pour aspirer l'air de ladite chambre (4) comprennent une plaque de couverture supérieure (32), qui est substantiellement au ras dudit plancher (10).

9. Installation selon une ou plusieurs des revendications précédentes, **caractérisée en ce que** lesdits tuyaux (28) dans le plancher (10) pour aspirer l'air de ladite chambre (4) comprennent une partie (29) qui, avec ladite plaque de couverture (32), définit un canal inférieur (30)

10. Installation selon une ou plusieurs des revendications précédentes, **caractérisée en ce que** lesdites deuxièmes ouvertures d'aspiration traversantes (34) sont obtenues au ras dudit plancher (10) et sont en communication avec lesdits tuyaux d'aspiration (28).

11. Installation selon une ou plusieurs des revendications précédentes, **caractérisée en ce que** lesdites secondes ouvertures traversantes (34) sont obtenues dans ladite plaque de recouvrement (32) pour laisser entrer dans lesdits tuyaux d'aspiration (28) soit l'air présent dans ladite chambre soit le liquide de lavage lors de l'étape de lavage et de désinfection de ladite chambre.

12. Installation selon une ou plusieurs des revendications précédentes, **caractérisée en ce que** lesdits tuyaux (28) dans le plancher (10) pour aspirer l'air de ladite chambre (4) comprennent également une deuxième plaque (35), qui est prévue avec des correspondantes troisièmes ouvertures traversantes (37) et qui est contrainte par coulissement à la surface inférieure de ladite plaque de couverture supérieure (32), et **en ce qu'**en glissant la seconde plaque (35) longitudinalement par rapport à la plaque de couverture supérieure (32), l'alignement desdites secondes ouvertures (34) et desdites troisièmes ouvertures (37) obtenues dans les plaques respectives est modifié, et ainsi la section de passage est modifiée, ainsi que la vitesse d'aspiration de l'air (23) qui pénètre dans les tuyaux d'aspiration (28).

13. Installation selon une ou plusieurs des revendications précédentes, **caractérisée en ce que** ladite unité de traitement d'air (12) comprend également des moyens qui mettent en oeuvre un cycle complet de réfrigération.

14. Installation selon une ou plusieurs des revendications précédentes, **caractérisée en ce que** ladite unité de traitement d'air (12) est configurée et commandée par ladite unité de commande et de gestion de ladite installation (2) de sorte que l'air (21) qui sort de lesdites premières ouvertures (24) dans ladite chambre (4) effleure les produits (3) à durcir et/ou sécher à une vitesse substantiellement de 1 m/s à 10 m/s.

15. Installation selon une ou plusieurs des revendications précédentes, **caractérisée en ce que** ladite unité de contrôle, de gestion et de surveillance est connectée et en communication avec une unité de supervision externe pour contrôler et gérer à distance ladite installation (2).
